Europäisches Patentamt

European Patent Office

Office européen des brevets

(11) Publication number: 0 342 896

A1

# EUROPEAN PATENT APPLICATION

(21) Application number: 89304884.3

(22) Date of filing: 15.05.89

(51) Int. Cl.⁴: C08J 7/06

(30) Priority: 17.05.88 US 195064

(43) Date of publication of application:
23.11.89 Bulletin 89/47

(84) Designated Contracting States:
AT BE CH DE FR GB IT LI LU NL SE

(71) Applicant: M & T CHEMICALS, INC.
One Woodbridge Center
Woodbridge, New Jersey 07095(US)

(72) Inventor: Burchill Michael T.
145 Princeton Arms So.
Cranbury New Jersey 08512(US)
Inventor: Bourrel Maurice
26 Rue de Montique
F-64000 Pau(FR)
Inventor: Conrad Neal
1909 Scenic Drive
Trenton New Jersey 08650(US)
Inventor: Hoffman Thomas E.
32 Spark Drive
Brick New Jersey 08723(US)
Inventor: Silbermann Joseph
8 Pendelton Place
Old Bridge New Jersey 08857(US)

(74) Representative: Ford, Michael Frederick et al
MEWBURN ELLIS & CO. 2/3 Cursitor Street
London EC4A 1BQ(GB)

(54) Composition and process for surface modification of resinous articles.

(57) Compositions and methods for incorporating a surface modifier ingredients, e.g. a UV absorber, into the surface of a resinous e.g. polycarbonate article are described. The compositions contain the modifier in micellular form in an aqueous medium. Surfactant, preferably a mixture of ionic and non-ionic, is used in the composition to cause formation of micelles.

# COMPOSITION AND PROCESS FOR SURFACE MODIFICATION OF RESINOUS ARTICLES

This invention relates to surface modification of resinous articles, and, more particularly, to a composition and process for incorporating a modifier ingredient into the surface region of a resinous article

Surface modification of polymeric articles, e.g. those fabricated from polyvinyl chloride, polycarbonate and the like, with a modifier ingredient, e.g. a UV stabilizer, to provide enhanced physical properties, is well known in the art. Incorporation of the UV stabilizer into the surface region of the polymer article, rather than in the interior of the article, is particularly effective because photodegradation is known to be a surface phenomenon.

These surface treatments generally are based on the ability of various organic solvents to swell the resin. Thereby, the modifier ingredient, in a solution with a swelling solvent, can be directed into the surface region of the article. However, organic solvents are usually volatile and thus environmental hazards are created during removal of the solvent in air. Furthermore, solid stabilizer material often is left on the treated surface after evaporation of the solvent in air which results in an article having a poor physical appearance.

The following patents are illustrative of the state of this art: U.S. Patent Nos. 3,043,709; 3,297,462; 3,309,220; 3,519,462; 3,617,330; 3,783,011; 3,892,889; 4,126,660; 4,146,658; 4,322,455; 4,323,597; 4,349,607; 4,396,678; 4,556,606; 4,678,684; Israel Patent No. 39,037; Belgium Patent No. 612,206; and Canadian 939,569.

The problem addressed herein is the provision of new compositions and processes for surface modification of resinous articles, and in particular compositions and processes which can be carried out without the problems commonly associated with organic solvents.

The solution according to the invention is to use the surface modifier in an aqueous medium in which it forms a micellular composition.

It is well known that above a given concentration in water, a surfactant will form and maintain colloidal clusters called "micelles". At this critical surfactant concentration, the bulk of the surfactant remains aggregated together as micelles rather than going into solution. Only a small fraction of the surfactant remains dissolved in water. The surfactant molecules in a micelle are arranged with their hydrocarbon (lipophilic) ends pointed towards the interior of the micelle and their polar (hydrophilic) ends directed outwardly towards the water. Such colloidal micelles have the remarkable property of incorporating in or upon themselves large quantities of molecules which otherwise would be insoluble in water.

Micelles in aqueous medium are known as emulsions. However, emulsions can be separated into two or more phases. Emulsion systems which remain in aqueous medium as apparently clear, one phase solutions are referred to as "micellular solutions" or "microemulsions".

Emulsions and microemulsions have been used extensively in many practical applications, including the household and personal products industry, in tertiary oil recovery, in oil drilling wells, to solubilize greases, and in polymerization processes.

In one aspect the invention provides a composition which includes a resin surface modifier ingredient in water with sufficient surfactant to form micelles therefrom.

In a preferred aspect the invention provides, in an aqueous medium, a micellular composition in the form of a microemulsion, from which an effective modifier ingredient can be incorporated in a predetermined concentration into the surface region of a resinous article.

Also, concentrates are provided which can be diluted to provide compositions in accordance with the invention.

In a further aspect the invention provides a process for incorporating a surface modifier ingredient into the surface region of a resinous article, in which the modifier ingredient is applied in a micellular aqueous medium.

What is described herein is a micellular composition and process for incorporating a resin surface modifier ingredient in aqueous medium into the surface region of a resinous article. The composition herein includes a modifier ingredient, a surfactant, and water. Preferably, the micellular composition is a micellular solution from which the modifier ingredient can effectively be transferred into the surface region of the article.

The process herein preferably includes the steps of forming the micellular composition from a predetermined mixture of modifier ingredient, surfactant and water, contacting the resinous article, washing the treated article, and air-drying. The contacting should be for long enough, and at a suitable temperature, to incorporate an effective amount of the modifier.

The micellular compositions preferably comprise about 0.1-50% by wt. modifier ingredient and about 0.5-95% by wt. surfactant, substantially the rest being water. More preferably, they comprise about 1-40%

EP 0 342 896 A1

by wt. modifier and about 1-30% by wt. surfactant, substantially the rest being water.

Preferably, part of the modifier ingredient and/or surfactant component can function also as a penetrant of the surface of the resin body, particularly as a liquid at the temperature at which the contacting step is carried out.

Most preferably, both the modifier and the surfactant components components are mixtures of compounds which have selected physical properties for optimization of the composition and process.

The surface modified polymeric articles made herein are particularly characterized by exhibiting excellent physical properties as a result of the surface modification, e.g. protection against the effects of ultraviolet radiation and a high degree of surface perfection.


## DESCRIPTION OF PREFERRED FEATURES

In one aspect of the present invention, there is provided a micellular composition for incorporating a resin surface modifier ingredient into the surface region of a resinous article in an aqueous micellular medium. The micelles of the micellular composition herein provide a large interfacial surface concentration of modifier so that impregnation of the modifier ingredient beneath the surface of the article can occur effectively.

The micellular composition herein is formed by mixing suitable amounts of surface modifier ingredient, surfactant and water. Suitably, the micellular composition is formed from about 0.1-50% by wt. of modifier ingredient and about 0.5-95% by wt. of surfactant, the rest being water. Preferably, the composition comprises about 1-40% by wt. modifier, and about 1-30% by wt. surfactant, the rest being water. A typical micellular composition of the invention comprises about 10% by wt. modifier, 20% by wt. surfactant and 70% by wt. water. Optionally, an inorganic salt, for example, sodium chloride, may be included in an amount up to about 5% by wt. of the composition to increase the ionic strength of the composition and to stabilize the micelles.

The micellular compositions used should contain at least the critical surfactant concentration necessary to form micelles in water. Generally the micelle will have a spherical configuration, although other geometrical shapes may exist as well. The composition of the invention preferably is a micellular solution, or microemulsion, which is a stable system and appears to the naked eye as a clear solution.

The process herein generally comprises contacting the resin article with the micellular composition to effect transfer of the modifier from the micellular composition to a position beneath the surface of the resin article, i.e. within its surface region, which extends to depth up to about 200 microns. Preferably, most of the modifier is present within the first 50 microns from the surface, and, most preferably, within the first 25 microns.

The micellular composition of the invention may be applied to the resinous body by any common technique known in this art, e.g. by dipping, spraying, brushing, curtain coating, roller coating, flow coating, and the like. The period of contact between resin article and composition should be sufficient to enable a desired concentration of the modifier to enter the surface region at a given temperature. Alternatively, the concentration of modifier ingredient in the composition and/or the contact temperature can be varied to provide a predetermined amount of modifier in the surface region of the article.

After incorporation of an effective amount of modifier into the surface region of the article, the thus-treated article is washed and dried.

Typical modifier ingredients include UV stabilizers, or absorbers, antioxidants, optical brighteners, anti-static agents, a slip agent, and photo and thermochromic materials, and mixtures thereof.

A typical modifier is a UV stabilizer selected from: derivatives of benzoates, benzophenones, benzotriazoles salicylates, hindered amine light stabilisers, formamidines, oxanilides, hydroxyacetophenones, malonates, cyanoacrylates, benzoacetophenones, and mixtures thereof.

Some known UV stabilizers provide particularly effective UV protection, but are solids at the contact temperature, some compounds are not particularly effective as UV stabilizers but are liquids at the contact temperature. These poorly effective stabilizers, however, often can function as a penetrant in the process, that is, they can swell the surface of the resin to allow the more effective UV stabilizer to enter. Accordingly, mixtures of two or more suitably selected UV stabilizers may be used advantageously in forming the micellular composition. For example, the combination of a solid benzophenone derivative and a liquid salicylate can be particularly useful, since the benzophenone is an effective UV stabilizer and the salicylate is an excellent penetrant albeit a weak UV stabilizer. Thus, a stabilizing amount of a UV absorber ingredient can be incorporated into the surface region of the resin article with only a small percentage of a

3

benzophenone derivative in the composition.

Suitable surfactants for use in the composition of the invention are widely available. Such surfactants may be ionic or non-ionic, or combinations thereof. For example, ionic surfactants, such as quaternary ammonium salts, which are cationic surfactants may be used. Suitable anionic surfactants include organic sulfate and phosphate salts. Other representative ionic surfactants include amphoteric ionic surfactants, such as betaines. Typical non-ionic surfactants are ethoxylated and polyethoxylated organic compounds.

Ionic surfactants are preferred because they are relatively insensitive to temperature variations, which enables the micellular composition containing them to remain stable over a wide range of contact temperatures. Non-ionic surfactants, on the other hand, which are more sensitive to changes in temperature, can function well as a penetrant in the system. Accordingly, a surfactant system which is a mixture of selected ionic and non-ionic surfactants, is preferred, particularly an anionic and non-ionic surfactant mixture.

The following factors should preferably be taken into account:

(1) A suitable modifier ingredient should enhance a given physical property of the resin article when present in relatively small quantities within the surface region of the article.

(2) The surfactant preferably should must form stable micelles with the selected modifier ingredient, wherein a substantially neutral condition exists between the resultant water and hydrocarbon affinities of the modifier and surfactant components. These relative affinities are known as the characteristic "hydrophilic-lipophilic balance", or HLB value, of the system. Accordingly, the required HLB, or RHLB of the modifier, therein, necessitates the use of a surfactant having an HLB which is at least equal to the RHLB of the modifier. For example, an effective UV stabilizer such as Cyasorb UV 9 has an RHLB of 16*; therefore, the HLB of the surfactant (McCutheon "Detergents and Emulsifiers") preferably should be 16 or greater to form stable micelles.

(3) To dissolve a predetermined amount of modifier within the micelles, one or more surfactant material may be used; however, generally it is preferred to use a selected mixture of surfactants. For example, a mixture of both an ionic and a non-ionic surfactant is an advantageous combination of surfactants, wherein the non-ionic surfactant can function as a penetrant of the resin surface during the contact step.

(4) A mixture of modifier ingredients may prove useful in selecting the components of the composition; in such mixtures, the co-modifier may function also as a penetrant in the system.

(*as determined by the Griffin method, see "the HLB System - A Time Saving Guide to Emulsion Selection" 103-3 ICI-Americans, Inc., Wilmington, DE)

A suitable resinous article for use herein is made by shaping such resin materials as polycarbonate, polyvinyl chloride, polyethylene, polypropylene, polystyrene, thermoplastic polyesters, e.g. polybutylene terephthalate, acrylonitrile/butadiene/styrene (ABS) copolymers, polyacrylates, and polymethacrylates. Used with polycarbonates it is notably effective.

A typical resin article is a shaped article, e.g. a sheet, although other forms such as films, rods, tubing, etc. may be used.

The invention will be illustrated with reference to the following examples.

Table I below is a list of typical modifier and surfactant compounds for use in the micellular compositions.

## TABLE I

### COMPONENTS OF MICELLULAR COMPOSITION

I.  **Modifier Ingredient**

A.  **UV Stabilizer**

| Trade Name | Chemical Name | Abbreviation |
|---|---|---|
| Cyasorb UV 5411 (American Cyanamid Co.) | 2(2'-hydroxy-5'-t-octylphenyl) benzotriazole | UV-5411 |
| Graessorb S (Graessorb Corp. England) | 2-ethylhexyl salicylate | GS |
| (Celanese) | 2'-hydroxyacetophenone | HAP |
| Hechenbleikner | (U.S. Patents 3,658,910 and 3,729,442) 2-hydroxy-4-isooctyloxybenzophenone | IOBP |
| (Aldrich) | 2-hydroxybenzophenone | HBP |
| Cyasorb UV-531 (Cyanamid) | 2-hydroxy-4-n-octyloxybenzophenone | UV-531 |
| Cyasorb UV-9 (Cyanamid) | 2-hydroxy-4-methoxybenzophenone | UV-9 |
| Uvinul UV-19 (BASF) | 2-hydroxy-4-(2-hydroxyethoxy)benzophenone | UV-19 |
| (Aldrich) | methyl salicylate | MS |
| (Aldrich) | ethyl salicylate | ES |
| (Aldrich) | butyl salicylate | BS |
| (Aldrich) | phenyl salicylate | PhS |
| (Aldrich) | 2-hydroxyethyl salicylate | HES |
| Tinuvin 765 (Ciba-Geigy) | bis-(1,2,2,6,6-pentamethylpiperdinyl) sebacate | T-765 |

II. Surfactant

    A. Ionic

        1. Cationic

          Quarternary ammonium compounds

| Ethoquad C12W* | methylbis(2-hydroxyethyl) cocoammonium chloride | EC-12W |
| Ethoquad C25* | methylpolyoxyethylene(15) cocoammonium chloride | EC-25 |
| Armak DMMC-W* | dimethylcocoammonium oxide | ADMMC-W |
| Armak C-33* | trimethylcocoammonium chloride | AC-33 |
| Ethoquad 18-25* | methyl polyoxyethylene (15) octadecyl ammonium chloride | E-18-25 |

      *Armak Chemical Division of Akzo Chemicals

        2. Anionic

| Sodium dodecyl sulfate | SDS |

    B. Non Ionics

        1. Ethoxylated phenols

| Igepal OD410* | 2-phenoxyethanol | IOD-410 |
| Igepal CO430* | polyoxyethylene (4) nonylphenyl ether | ICO-430 |
| Igepal CO530* | polyoxyethylene (6) nonylphenyl ether | ICO-530 |
| Igepal CO720* | polyoxyethylene (12) nonylphenyl ether | ICO-720 |
| Igepal CO887* | polyoxyethylene (30) nonyl phenyl ether | ICO-887 |

      *GAF Corp.

        2. Other

| Synthrapol KB* | polyoxyethylene (5.5) decyl ether | SKB |
| Brij 30* | polyoxyethylene (4) lauryl ether | Br30 |
| Span 20* | sorbitan monolaurate | SP20 |
| Tween 61* | polyoxyethylene (4) sorbitan monostearate | T61 |
| Pluronic L63 | block copolymer of ethylene oxide and propylene oxide | PL-63 |

      *ICI Chemicals

## EXAMPLE I

## PREPARATION OF MICELLULAR COMPOSITION

4 g of Cyasorb UV-9 and 75 g of water were heated at 60°C until the UV-9 was melted, and 21 g (active material) of Ethoquad EC-12W surfactant was added with stirring. The temperature was maintained at 60°C for 15 minutes. A microemulsion formed immediately upon addition of the surfactant as evidenced by light scattering observations which showed the presence of micelles of a particle size characteristic of a microemulsion.

Table II below describes micellular compositions embodying the invention, prepared as described in Example I.

TABLE II

MICELLULAR COMPOSITIONS

| EXAMPLE NO. | MODIFIER(S)/WT% | SURFACTANT(S)/WT% | WATER.WT% |
|---|---|---|---|
| 1 | HBP/5 | EC12W/25 | 70 |
| 2 | UV-9/4 | EC-12W/21 | 75 |
| 3 | PhS/4 | EC-25/50 | 46 |
| 4 | UV-9/4 | EC-25/42 | 54 |
| 5 | ES/4 | EC-25/42 | 54 |
| 6 | HAP/4 | EC-12W/15 | 81 |
| 7 | UV-531/4 | EC-12W/33.6 | 62.4 |
| 8 | UV-19/4 | EC-12W/43.6 | 52.3 |
| 9 | GS/20 | ICO-887/15 | 65 |
| 10 | IOBP/40 | ICO-720/20 | 40 |
| 11 | HBP/6.6 | EC12-W/11.5 ADMMC-W/9.8 | 72 |
| 12 | HBP/4 | EC12W/8 AC-33/40 | 48 |
| 13 | ES/4 UV-9/4 | EC-25/50 | 42 |
| 14 | PhS/4 UV-9/4 | EC-25/58.3 | 33.7 |
| 15 | HAP/4 UV-9/4 | EC-12W/32.3 | 59.8 |
| 16 | MS/4 UV-9/4 | EC-25/50 | 42 |

7

| | | | |
|---|---|---|---|
| 17 | HAP/4<br>UV-9/4 | EC-12W/15 | 77 |
| 18 | UV-531/5 | SDS/19<br>IOD-410/10 | 66 |
| 19 | UV-531/5<br>T-765/1 | SDS/19<br>IOD-410/10 | 65 |
| 20 | HAP/21<br>UV-5411/15.3 | ICO-720/27.3 | 36.4 |
| 21 | HAP/21<br>UV-5411/15.3 | ICO-720/19.9<br>ICO-887/12.7 | 31.1 |
| 22 | IOBP/20<br>HAP/20 | ICO-720/20 | 40 |
| 23 | IOBP/18.2<br>HAP/18.2 | ICO-720/18.2<br>ICO-887/9.1 | 30.3 |
| 24 | UV-531/4<br>HAP/4 | EC-12W/32.2 | 59.8 |
| 25 | BS/4<br>UV-9/4 | E-18-25/25.6<br>IOD-410/9 | 57.4 |
| 26 | UV-531/5 | E-18-25/17.1<br>ICO-530/10<br>IOD-410/5.9 | 62 |
| 27 | IOBP/5 | E-18-25/12.2<br>ICO-530/7.8<br>IOD-410/10 | 10 |
| 28 | UV-531/5 | E-18-25/14.9<br>IOD-410/15.1 | 65 |
| 29 | IOBP/5 | E-18-25/14.9<br>IOD-410/15.1 | 65 |
| 30 | IOBP/5 | E-18-25/9.8<br>ICO-430/4.5<br>IOD-410/10 | 70.7 |

| | | | |
|---|---|---|---|
| 31 | UV-531/5<br>HES/10 | E-18-25/17.1<br>IOD-410/5.9 | 62 |
| 32 | UV-531/10<br>HES/20 | E-18-25/26.8<br>ICO-530/9.2 | 34 |
| 33 | UV-531/4<br>HES/8 | E-18-25/9.8<br>ICO-530/6.2 | 72 |
| 34 | IOBP/5 | E-18-25/12.2<br>IOD-410/10<br>PL-63/8. | 63.8<br>(NaCl 1.0) |
| 35 | IOBP/5 | E-18-25/12.2<br>IOD-410/10<br>SKB/7.8 | 63.5<br>(NaCl 1.5) |
| 36 | IOBP/5 | E-18-25/12.2<br>IOD-410/10<br>BR-30/8.6 | 63.7<br>(NaCl 1.5) |
| 37 | IOBP/5 | E-18-25/12.2<br>IOD-410/10<br>SP-20/9.0 | 62.3<br>(NaCl 1.5) |
| 38 | IOBP/5 | E-18-25/12.2<br>IOD-410/10<br>TW61/9.1 | 61.7<br>(NaCl 2.0) |
| 39 | IOBP/5 | E-18-25/12.2<br>IOD-410/10<br>BR-76/7.8 | 65<br>(NaCl 2.5) |
| 40 | UV-9/4<br>ES/4 | E-18-25/43 | 49 |
| 41 | UV-9/5 | E-18-25/20<br>IOD-410/15 | 60 |
| 42 | UV-9/5 | EQ-25/17.5<br>IOD-410/10 | 67.5 |

## PREPARATION OF A TYPICAL SURFACE MODIFIED ARTICLE

A polycarbonate resin sheet 1"x3" having a thickness of 60 mils was immersed in 130 g of the above-prepared micellular compositions for a given period of time and at a predetermined temperature, as described in Table III below. Thereafter the treated sheet was removed from the composition. Residual treating composition which remained on the surface of the sheet was displaced with running water and the sheet was air-dried.

Table III below shows the results of treating several resins with several of the compositions listed in Table II. The results in Table III show that treatment of the resin sheets with compositions having a UV stabilizer concentration as low as 4 wt. % and for contact times of 2.5 seconds or more provides an effective amount of UV stabilizer in the surface region of the sheet. Excellent protection against the adverse effects of UV light is afforded.

TABLE III
SURFACE MODIFIED RESIN ARTICLES

| Ex. No. | Contact Conditions | | Amt. of Stabilizer | $\triangle$ YI UV Exposure (in weeks) | |
|---|---|---|---|---|---|
| | Time (sec.) | Temp ($^0$C) | (g/m$^2$) | 2 | 4 |
| POLYCARBONATE RESIN SHEET* | | | | | |
| | | | Control | 22.8 | 26.3 |
| 1 | 120 | 60 | HBP=1.17 | | |
| 2 | 120 | 90 | UV-9=1.50 | .09 | 1.60 |
| 13 | 120 | 80 | UV-9= .90 ES= .42 | .70 | 1.81 |
| 14 | 120 | 70 | UV9=0.90 PhS=0.90 | .08 | 1.85 |
| 18 | 60 | 70 | UV-531=1.49 | 0.60 | 0.65 |
| 24 | 120 | 60 | UV-9=1.17 HAP= .27 | 1.03 | 2.34 |
| 25 | 120 | 50 | UV-9=1.17 BS= .36 | .99 | .91 |
| 27 | 30 | 70 | IOBP=1.05 | 1.41 | 2.45 |
| 31 | 60 | 70 | UV-531=2.35 HES= .59 | .08 | .58 |
| 33 | 60 | 70 | UV-531=1.01 HES= .42 | 1.17 | 1.72 |

*Dow Calibre 300-3 1'x3'x1.4mm-extruded

### RIGID TRANSLUCENT PVC SHEET**

| | | | | | |
|---|---|---|---|---|---|
| | | | Control | 51.0 | |
| 1 | 120 | 60 | HBP=1.14 | | |
| 1 | 120 | 80 | HBP=2.0 | | |
| 21 | 120 | 68 | UV-5411=4.6 HAP=1.61 | 3.0 | |
| 31 | 120 | 70 | UV-531=1.14 HES= .74 | 6.09 | 7.26 |
| 32 | 30 | 80 | UV-531= .80 HES= .47 | 7.80 | 9.70 |

**Goodrich Geon 103 (with thermal stabilizer, calcium stearate, wax, impact modifier) 1'x3"x1 mm (extruded)

### CALENDERED CLEAR PVC SHEET***

| | | | | | |
|---|---|---|---|---|---|
| | | | Control | 58.0 | 71.1 |
| 25 | 2.5 | 60 | UV-9=3.55 | 1.34 | 33.2 |

***Klokner Pentaplast, VA, 1"x3"x5 mils

### POLYSTYRENE RESIN SHEET+

| | | | | 2 wks. | 5 wks. |
|---|---|---|---|---|---|
| | | | Control | 14.7 | 27.1 |
| 18 | 5 | 70 | UV-531= .692 | 1.7 | 11.3 |
| 19 | 5 | 70 | UV-531= .68, T-765=N.D. | 0.9 | 7.5 |

+Dow Styron 685D 3'x3'x1 mm (extruded)

### POLYBUTYLENETEREPHTHALATE++

| | | | | | |
|---|---|---|---|---|---|
| | | | Control | 16.5 | 28.1 |
| 18 | 120 | 70 | UV531= .305 | 11.9 | 21.8 |
| 19 | 120 | 70 | UV-531= .17, T-765=N.D. | 10.6 | 20.2 |

++Injection Molded General Electric Valox 295 3'x3'x1 mm

Several of these surface modified articles were microtomed into 25 micron sections, down to a total depth of 200 microns from the surface. The amount of UV stabilizer present in each of these sections was determined by means of high pressure liquid chromatography (HPLC) analysis. The results are given in Table IV below.

11

TABLE IV

| CONCENTRATION PROFILE OF UV STABILIZER IN SURFACE REGION | | | | | | | | | |
|---|---|---|---|---|---|---|---|---|---|
| Example No. | 18 | | | 40 | | | 18 | | |
| Resin | polycarbonate | | | polycarbonate | | | polyvinyl chloride | | |
| Treatment Time | 45 sec. | | | 120 sec. | | | 60 sec. | | |
| Treatment Temp. | 70 C | | | 70 C | | | 70 C | | |
| Section (microns) | Amt. Stab. ($g/m^2$) | % Total Stab. in Section | Total % Stab. at depth | Amt. Stab. ($g/m^2$) | Total Stab. in Section | Total % Stab. at Depth | Amt. Stab. ($g/m^2$) | % Total Stab. in Section | Total % Stab. at depth |
| 1 - 25 | .76 | 79.2 | 79.2 | 1.42 | 83.1 | 83.1 | .48 | 62.8 | 62.8 |
| 26 - 50 | .13 | 14.0 | 93.2 | .15 | 8.9 | 92.0 | .14 | 18.4 | 81.2 |
| 51 - 75 | .02 | 2.2 | 95.4 | .05 | 2.7 | 94.7 | .07 | 8.8 | 90.0 |
| 76 - 100 | .02 | 2.1 | 97.5 | .02 | 1.1 | 95.8 | .03 | 4.1 | 94.1 |
| 101 - 125 | .012 | 1.3 | 98.8 | .02 | 1.1 | 96.9 | .02 | 2.4 | 96.5 |
| 126 - 150 | .005 | 0.5 | 99.3 | .01 | 0.7 | 97.6 | .01 | 1.8 | 98.3 |
| 151 - 175 | .005 | 0.5 | 99.8 | .01 | 0.8 | 98.4 | .01 | 1.3 | 99.6 |
| 176 - 200 | 0 | 0 | 99.8 | .01 | 0.6 | 99.0 | .003 | 0.4 | 100 |
| Total | 0.95 | | | 1.69 | | | .77 | | |

EP 0 342 896 A1

Furthermore, residual stabilizer is not present on the modified surface of the treated article. The product also exhibited a modified surface which was uniform, or non-tacky, without streaks or blotches of stabilizer thereon, retained its original planarity and hardness, and otherwise has a physical appearance as if untreated.

The results in Table IV shows that the composition described provides a surface modified article having its surface modified with a stabilizing amount of a modifier ingredient. Suitably, about 0.1 to 10 g/m$^2$, and preferably about 0.5 to 1.9 g/m$^2$, of a UV modifier ingredient is incorporated to a depth of up to about 200 microns from the surface of the body in decreasing concentration with depth. At least 60% of the modifier is present within the first 50 microns of this said surface region, and preferably at least about 80% is located within its first 50 microns.

## Claims

1. A composition comprising a modifier ingredient for incorporation into the surface region of a resinous article, characterised in that the composition is a micellular composition comprising the modifier ingredient in an aqueous medium with surfactant.

2. A composition according to claim 1, further comprising an inorganic salt.

3. A composition according to claim 1 or claim 2 comprising from about 0.1 to about 50% by weight of the modifier ingredient.

4. A composition according to any one of the preceding claims, comprising from about 0.5 to about 95% by weight of surfactant.

5. A composition according to any one of the preceding claims in which the modifier ingredient and/or the surfactant is a mixture of two or more compounds, at least one of which can function as a penetrant of the resin surface.

6. A composition according to any one of the preceding claims in which said modifier ingredient is a UV stabilizer, an antioxidant, an optical brightener, an anti-static agent, a photo or thermochromic agents, or a slip additive, or a mixture of two or more of these.

7. A composition according to claim 6 wherein said modifier ingredient comprises a UV stabilizer selected from: derivatives of benzoates, benzophenones, benzotriazoles, salicylates, hindered amine light stabilisers, formamidines, oxanilides, hydroxyacetophenones, malonates, cyanoacrylates, benzoacetophenones, and mixtures thereof.

8. A composition according to any one of the preceding claims in which the modifier ingredient is dissolved in a solvent capable of swelling a resin surface.

9. A composition according to any one of the preceding claims in which the micellular composition is a microemulsion.

10. A composition according to any one of the preceding claims in which the surfactant is a mixture of ionic and non-ionic surfactants.

11. A concentrate capable of being diluted to provide a composition according to any of the preceding claims.

12. A process for incorporating a surface modifier ingredient into a surface region of a resinous article characterised by contacting the resinous article with a composition according to any one of claims 1 to 10.

13. A process according to claim 12 wherein the micellular composition is applied to the resin article by dipping, spraying, curtain coating, roller coating, flow coating, or brushing.

14. A process according to claim 12 or claim 13, including the steps of washing the treated article and air drying.

15. A process according to any of claims 12 to 14 in which the resinous article is prepared from polycarbonate, polyvinyl chloride, polyethylene, polypropylene, acrylonitrile/butadiene/styrene copolymer, polyacrylate, polymethacrylate,thermoplastic polyester, polybutylene terephthalate, or polystyrene resin, or a combination of any of these.

16. A surface modified resinous article obtainable using a process according to any of claims 12 to 15, comprising a resinous body modified within a surface region thereof with a modifier ingredient.

17. A surface modified resinous article according to claim 16 in which at least 60% of the modifier ingredient is present in the first 50 microns depth of said surface region.

18. A surface modified resinous article according to claim 16 or claim 17 wherein said resinous body is of polycarbonate.

19. A surface modified resinous article according to any one of claims 16 to 18, wherein said modifier ingredient is an ultraviolet light absorber.

20. A surface modified resinous article according to any one of claims 16 to 19 wherein the modifier ingredient is present in an amount of about 0.1 to 10 $g/m^2$ within said surface region.

21. A surface modified resinous article according to any one of claims 16 to 20, wherein the modifier ingredient is present in an amount of about 0.5 to 1.9 $g/m^2$ of said surface region, at least about 80% of said ingredient being present in the first 50 microns depth of said surface region.

14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 100, no. 12, 19th March 1984, page 74, abstract no. 87206b, Columbus, Ohio, US; & JP-A-58 156 077 (TEIJIN LTD) 16-09-1983 * Abstract * | 1,3-7, 11,12, 15,16, 19 | C 08 J 7/06 |
| X | DE-B-1 141 781 (VEB CHEMISCHES WERK BERLIN-GRÜNAU) * Whole document * | 1,3,4,6 ,7,8,11 ,12,15, 16,19 | |
| Y | | 12-16, 18,19 | |
| Y | BE-A- 662 349 (GENERAL ELECTRIC) * Claims 1-5; page 9, line 6 - page 11, line 15 * | 12-16, 18,19 | |
| A | US-A-3 271 190 (G.F. NADEAU et al.) * Claims; column 1, lines 51-67 * | 1,3,4,6 ,12-16, 20 | |
| A | FR-A-2 165 691 (MUNKSJÖ AB) * Claim 1; example 2 * | 1,10 | TECHNICAL FIELDS SEARCHED (Int. Cl.4)  C 08 J |

The present search report has been drawn up for all claims

| Place of search | Date of completion of the search | Examiner |
|---|---|---|
| THE HAGUE | 25-08-1989 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)